# FASCICULE DE BREVET EUROPEEN

(11) **EP 2 368 469 B1**
(45) Date de publication et mention de la délivrance du brevet: **20.08.2014**
(21) Numéro de dépôt: 11305288.0
(22) Date de dépôt: 15.03.2011
(51) Int. Cl.: A47J 43/06, A47J 43/046, A47J 43/07, A47J 43/08

(54) **Appareil électroménager de préparation culinaire comportant un boitier moteur destiné à recevoir différents types d'accessoires amovibles**
Elektrohaushaltsgerät zur Essenzubereitung, das ein Motorgehäuse zur Aufnahme von verschiedenen Typen von auswechselbaren Zubehörteilen umfasst
Household cooking appliance comprising a housing intended for holding various types of removable accessories

(30) Priorité: 22.03.2010 FR 1052015
(43) Date de publication de la demande: 28.09.2011
(73) Titulaire: SEB S.A., 69130 Ecully (FR)
(72) Inventeur: Beaudet, Olivier, 61140 Geneslay (FR); Maunoury, Damien, 53100 Moulay (FR)
(74) Mandataire: Bourrières, Patrice

(56) Documents cités:
- EP-A1- 0 004 987
- FR-A1- 2 442 033
- FR-A5- 2 140 891

## Description

La présente invention se rapporte au domaine technique général des appareils électroménagers de préparation culinaire comportant un boîtier moteur comprenant un socle de réception destiné à recevoir différents types d'accessoires amovibles, tel un bol hachoir ou un récipient blender, et se rapporte plus particulièrement à un appareil électroménager dans lequel le boîtier moteur est muni d'un dispositif de freinage du moteur.

Il est connu, de la demande de brevet FR 2 442 033, un appareil de préparation culinaire comprenant un boîtier moteur comportant un socle de réception destiné à recevoir alternativement un bol hachoir ou un récipient blender, le boîtier moteur comportant un interrupteur de marche et d'arrêt du moteur pouvant être actionné par un mouvement du couvercle du bol hachoir ou en manoeuvrant un levier sur le récipient blender. Un tel appareil présente l'avantage d'une grande polyvalence en permettant l'utilisation d'un même boîtier moteur avec différents types de récipients de travail. Cependant, dans cet appareil, il n'est pas prévu de dispositif de freinage du moteur de sorte que si l'utilisateur parvient à retirer rapidement le couvercle du bol hachoir, il y a un risque qu'il ait accès à l'intérieur du bol avant que l'outil coupant ne se soit arrêté de tourner du fait de l'inertie du moteur.

Il est également connu de la demande de brevet FR 2 140 891 d'avoir un appareil de préparation culinaire comportant un boîtier moteur destiné à recevoir un bol hachoir, le boîtier comprenant un interrupteur pour la mise en marche du moteur pouvant être actionné par un mouvement vertical du couvercle. Dans ce document, le boîtier moteur est muni d'un dispositif de freinage du moteur garantissant un arrêt rapide du moteur, et donc de l'outil de fragmentation, lorsque le couvercle est retiré du boîtier moteur. Un tel dispositif de freinage présente l'avantage de procurer une plus grande sécurité d'utilisation de l'appareil en évitant que l'utilisateur n'accède au contenu du bol hachoir alors que l'outil de fragmentation est encore en train de tourner du fait de l'inertie du moteur.

Cependant, un tel dispositif de freinage n'est pas utile avec tous les accessoires pouvant être associés au boîtier moteur et peut même devenir gênant dans certains cas particuliers. Ainsi, si un tel boîtier moteur était utilisé avec un récipient blender pour le mixage de liquides, l'arrêt brutal de l'outil de mixage à la coupure d'alimentation du moteur présenterait l'inconvénient de pouvoir provoquer des débordements par le couvercle en perturbant brutalement le flux de mixage.

Aussi, un but de la présente invention est de proposer un appareil électroménager de préparation culinaire comportant un boîtier moteur muni d'un socle de réception destiné à recevoir alternativement différents types d'accessoires, tel un bol hachoir ou un récipient blender, dans lequel le moteur est mis en marche par un mouvement d'une partie de l'accessoire posé sur le boîtier commande. Un autre but de l'invention est de proposer un appareil électroménager qui procure une grande sécurité ainsi qu'une bonne ergonomie d'utilisation quelque soit l'accessoire utilisé, tout en restant simple et économique à réaliser.

A cet effet, l'invention se rapporte à un appareil électroménager de préparation culinaire comportant un boîtier moteur comportant un socle de réception destiné à recevoir alternativement différents types d'accessoires amovibles, tel un récipient blender ou un bol hachoir, le boîtier renfermant un moteur pour l'entraînement d'un outil de travail porté par l'accessoire dont le fonctionnement est commandé par un interrupteur de marche et d'arrêt du moteur pouvant être actionné lors d'un mouvement d'une partie de l'accessoire posé sur le boîtier, caractérisé en ce que le boîtier comporte également un dispositif de freinage permettant de freiner brutalement le moteur après la commande d'arrêt du moteur par l'interrupteur et en ce que l'appareil comporte au moins un accessoire comprenant une embase comportant des moyens d'actionnement rendant le dispositif de freinage inactif lorsque l'accessoire est utilisé avec le boîtier.

De cette manière, le dispositif de freinage du moteur est désactivé lorsque le boîtier moteur est utilisé avec un accessoire pour lequel le dispositif de freinage est inutile pour la sécurité et présente un inconvénient pour l'ergonomie d'utilisation de l'appareil.

Selon une autre caractéristique de l'invention, le dispositif de freinage est activé par une tige de sécurité mobile entre une position de repos, dans laquelle le dispositif de freinage est actif, et une position de fonctionnement, dans laquelle le dispositif de freinage est inactif, la tige étant ramenée dans la position de repos par des moyens de rappel, l'embase de l'accessoire comprenant une patte d'actionnement venant agir sur la tige de sécurité pour l'amener dans la position de fonctionnement lorsque l'embase est disposée sur le socle de réception du boîtier.

Selon une autre caractéristique de l'invention, l'interrupteur de commande du moteur est actionné par une tige de commande mobile entre une position de fonctionnement et une position d'arrêt du moteur, la tige de commande étant ramenée vers la position d'arrêt par des moyens de rappel et pouvant être déplacée vers la position de fonctionnement au moyen d'un organe actionnable manuellement sur l'accessoire.

Selon une autre caractéristique de l'invention, la tige de commande et/ou ladite tige de sécurité comportent une touche de manoeuvre s'étendant au niveau du socle de réception du boîtier moteur.

Selon encore une autre caractéristique de l'invention, la touche de manoeuvre est disposée derrière une ouverture formée à la base d'une rampe de guidage permettant une liaison de type liaison baïonnette avec l'accessoire.

Selon encore une autre caractéristique de l'invention, l'appareil comporte un bol hachoir pouvant reposer sur le socle de travail, le bol hachoir étant fermé par un couvercle présentant une forme adaptée pour venir actionner la tige de commande du moteur et la tige de sécurité seulement lorsqu'une pression verticale est exercée sur le dessus du couvercle.

Selon une autre caractéristique de l'invention, l'accessoire comportant les moyens d'actionnement rendant le dispositif de freinage inactif est un récipient blender comprenant une embase supportant un bouton de commande permettant d'actionner l'interrupteur.

Selon une autre caractéristique de l'invention, le bouton de commande traverse une ouverture de l'embase et est solidaire d'une pièce montée pivotant sur l'embase, la pièce comportant une partie élastiquement déformable assurant le rappel automatique du bouton de commande dans une position d'arrêt du moteur.

Selon une autre caractéristique de l'invention, le dispositif de freinage comporte un dispositif de type inverseur établissant une liaison court-circuit entre les bornes de l'induit du moteur.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective d'un appareil électroménager de préparation culinaire selon un mode particulier de réalisation de l'invention, l'appareil comprenant un boîtier moteur accouplé à un récipient blender,
- la figure 2 est une vue en perspective du boîtier moteur de l'appareil électroménager de la figure 1,
- la figure 3A est une vue en perspective de l'embase du récipient blender de l'appareil de la figure 1,
- la figure 3B est une autre vue en perspective de l'embase du récipient blender de l'appareil de la figure 1, cette figure illustrant la coopération de l'embase avec le dispositif de freinage et le dispositif de commande du moteur intégrés dans le boîtier moteur,
- la figure 4 est une vue en perspective du récipient blender dans laquelle l'embase est représentée en perspective éclatée,
- la figure 5 est une vue en perspective de l'embase de la figure 4 assemblée,
- les figures 6 et 7 sont des vues en perspective du mécanisme agissant sur l'interrupteur de commande du moteur lorsque le bouton de commande est respectivement en position d'arrêt et en position de fonctionnement du moteur,
- la figure 8 est une vue en perspective du boîtier moteur de la figure 2 accouplé à un bol hachoir, le couvercle de fermeture étant représenté en position soulevée.

Seuls les éléments nécessaires à la compréhension de l'invention ont été représentés. Pour faciliter la lecture des dessins, les mêmes éléments portent les mêmes références d'une figure à l'autre.

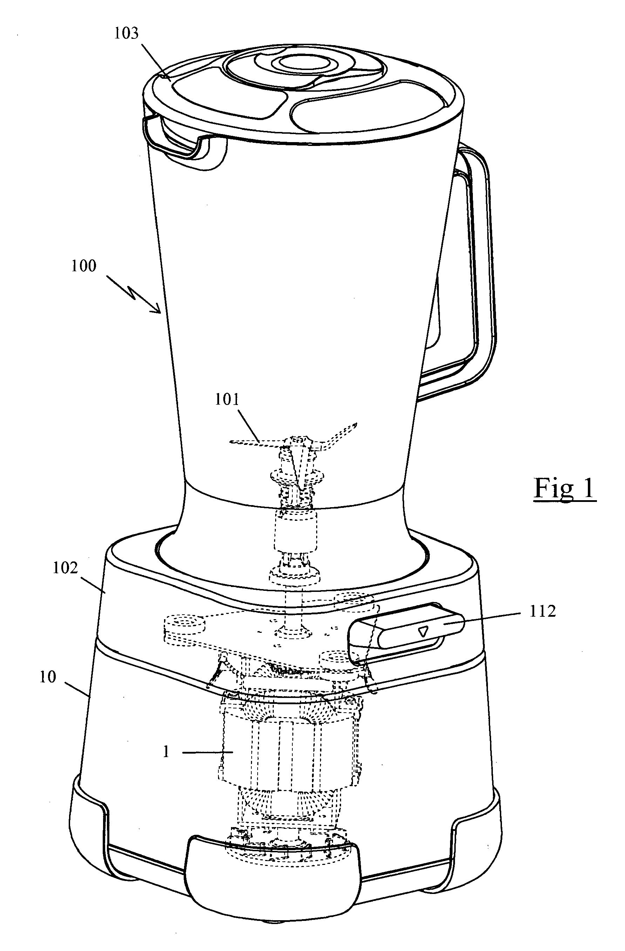

La figure 1 représente un appareil de préparation culinaire comportant un boîtier moteur 10 supportant un accessoire amovible 100 constitué par un récipient blender fermé par un couvercle 103, le boîtier 10 renfermant un moteur 1 permettant l'entraînement en rotation d'un outil de mixage 101 disposé dans le récipient blender, représentés en pointillé sur la figure 1.

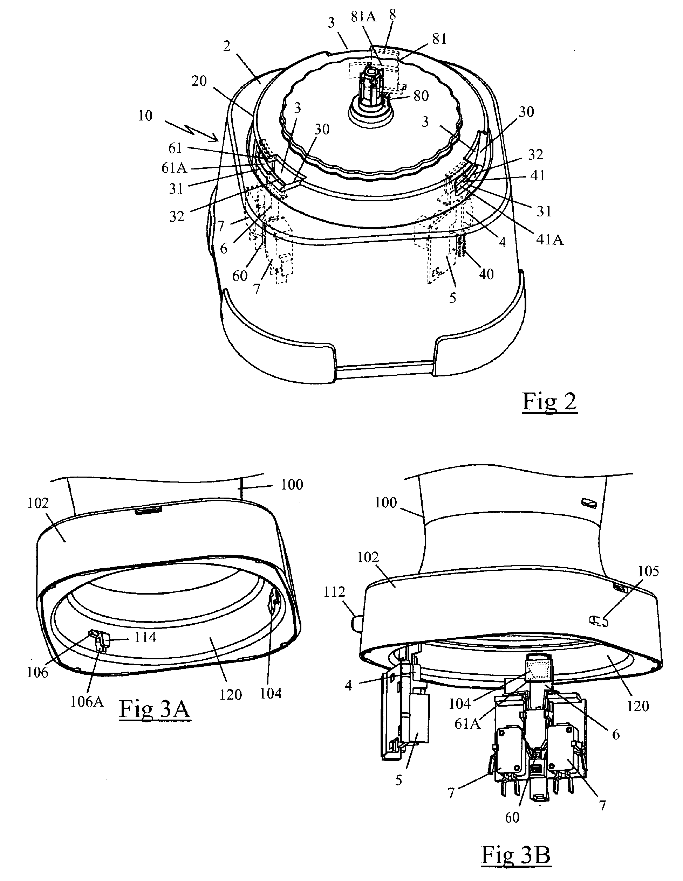

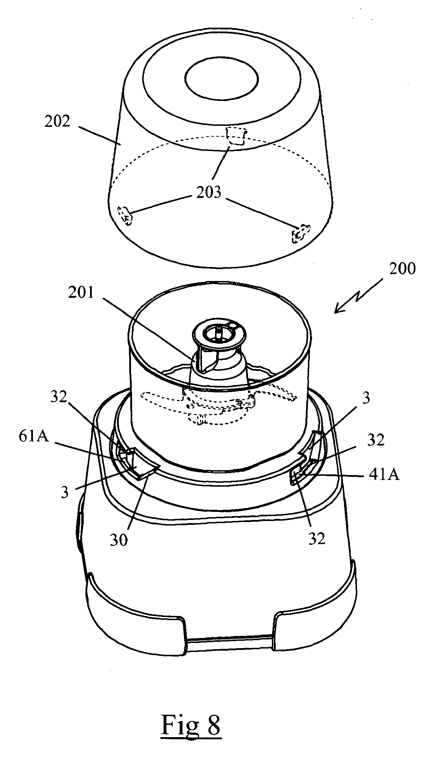

Conformément à la figure 2, le boîtier moteur 10 comporte un corps présentant une forme extérieure sensiblement cubique, convergeant légèrement vers un socle de réception 2 sur lequel peuvent être disposés alternativement différents types d'accessoires, tel un récipient blender 100, ainsi que cela est illustré sur la figure 1, ou un bol hachoir 200, ainsi que cela est illustré sur la figure 8.

Le socle de réception 2 comporte une partie conique de centrage 20 de l'accessoire faisant saillie sur le socle de réception 2, cette partie conique de centrage 20 comprenant trois découpes 3 périphériques identiques réparties à 120° les unes des autres.

De manière avantageuse, les trois découpes 3 comportent un bord incliné formant une rampe de guidage 30 vers une rainure 31 formée sur la surface périphérique de la partie conique de centrage 20 et s'étendant horizontalement, chaque rainure 31 présentant un bord inférieur muni d'une fente 32 débouchant sur un mécanisme de tige coulissante 4, 6, 8 disposé à l'intérieur du boîtier moteur 10.

L'un des mécanismes de tige coulissante, disposé derrière une première découpe 3 située d'un côté de la face avant du boîtier 10, est constitué par une tige de commande 4 du moteur 1, représenté en pointillé sur la figure 2. Cette tige de commande 4 est portée par un bâti, non représenté sur les figures, intégré dans le boîtier moteur 10 et est ramenée par un ressort de rappel 40 dans une position haute, dite position d'arrêt, dans laquelle la tige de commande 4 n'actionne pas un interrupteur 5 présent sur le circuit d'alimentation du moteur 1. Dans cette position d'arrêt de la tige de commande 4, le circuit d'alimentation électrique du moteur 1 est coupé et le moteur 1 est à l'arrêt.

La tige de commande 4 comporte une extrémité supérieure munie d'une empreinte latérale 41 venant dans le prolongement de la rainure 31 du corps et comportant un bord inférieur formant une touche de manoeuvre 41A qui est accessible au travers de la fente 32 de la rainure 31, la tige de commande 4 se déplaçant vers la bas lorsqu'une pression verticale est exercée sur la touche de manoeuvre 41A pour occuper une position de fonctionnement du moteur dans laquelle la tige de commande 4 vient actionner l'interrupteur 5 du circuit d'alimentation du moteur 1 pour alimenter ce dernier en électricité.

La deuxième découpe 3 située de l'autre côté de la face avant du boîtier 10 masque une tige de sécurité 6, représentée en pointillé sur la figure 2, qui coopère avec un dispositif de freinage électrique du moteur, la tige de sécurité 6 étant montée coulissante sur un bâti, non représenté sur les figures, disposé à l'intérieur du boîtier moteur 10 entre une position haute, dite position de repos, vers laquelle elle est amenée par un ressort de rappel 60, et une position basse, dite position d'abaissement, dans laquelle le dispositif de freinage est mis hors service. La tige de sécurité 6 comporte une extrémité supérieure munie d'une empreinte latérale 61 venant dans le prolongement de la rainure 31 et comportant un bord inférieur formant une touche de manoeuvre 61A qui est accessible au travers de la fente 32 de la rainure 31, la tige de sécurité 6 se déplaçant vers le bas lorsqu'une pression verticale est exercée sur la touche de manoeuvre 61A pour occuper la position d'abaissement.

De manière connue en soi, le dispositif de freinage électrique du moteur, non visible sur les figures, est constitué par un dispositif de mise en court-circuit de l'induit du moteur, tel que décrit plus en détail dans la demande de brevet FR 2 140 891. Cette mise en court-circuit de l'induit du moteur est effectuée au moyen de deux interrupteurs 7 qui sont actionnés simultanément par la tige de sécurité 6 de telle manière que la mise en service du dispositif de freinage s'effectue lors du retour de la tige de sécurité 6 en position de repos par inversion du branchement électrique aux bornes de l'une des bobines du moteur 1.

La troisième découpe 3 du socle de réception 2, disposée vers l'arrière du boîtier 10, donne accès à une tige de rappel 8, représentée en pointillé sur la figure 2, la tige de rappel étant montée coulissante sur un bâti, non représenté sur les figures, à l'encontre d'un ressort de rappel 80 et comprenant une extrémité supérieure munie d'une empreinte 81 venant dans le prolongement de la rainure 31. De manière semblable aux empreintes 41, 61 des tiges de commande 4 et de sécurité 6, l'empreinte 81 comporte un bord inférieur formant une touche de manoeuvre 81A qui est accessible au travers de la fente 32 de la rainure 31 et dont le but est de fournir un troisième point d'appui fournissant un effort de rappel équivalent à celui procuré par les tiges de commande 4 et de sécurité 6.

Ainsi, comme on peut le voir sur la figure 8, dans le cas de l'utilisation du boîtier moteur 10 avec un bol hachoir 200 renfermant un outil de fragmentation 201 et dans lequel la mise en marche du moteur 1 est commandée au moyen d'un couvercle 202 de fermeture comportant des pattes 203 venant s'engager dans les découpes 3 pour se positionner au dessus des touches de manoeuvre 41 A, 61A, 81A, la tige de rappel 8 permet d'obtenir un appui équilibré du couvercle 202 sur les trois touches de manoeuvre 41A, 61A, 81A de sorte que le couvercle 202 reste en position horizontale, la mise en marche du moteur 1 s'effectuant classiquement en exerçant une pression verticale, vers le bas, sur le couvercle 202.

La figure 3A illustre la partie inférieure du récipient blender 100 pouvant être disposé sur le socle de réception 2 du boîtier moteur 10, le récipient blender 100 comportant à cet effet une embase 102 présentant un contour sensiblement parallélépipédique venant dans le prolongement de la forme extérieure sensiblement cubique du boîtier moteur 10, l'embase 102 comportant un orifice central 120 adapté au diamètre de la partie conique de centrage 20 du socle de réception 2 de manière à ce que l'embase 102 se centre naturellement sur le socle de réception 2.

Conformément aux figures 3A et 3B, l'embase 102 comporte une patte d'actionnement 104 fixée rigidement à l'intérieur de l'orifice central 120 de l'embase 102, cette patte d'actionnement 104 étant adaptée pour venir s'engager dans la découpe 3 du socle puis au travers de la fente 32 afin de venir appuyer sur la touche de manoeuvre 61A de la tige de sécurité 6 lorsque l'embase 102 est placée sur le socle de réception 2 de manière à déplacer la tige de sécurité 6 dans la position d'abaissement illustrée à la figure 3B.

Le récipient blender 100 peut alors être verrouillé sur le socle de réception 2 en tournant légèrement l'embase 102 de manière à ce que la patte 104 comportant une partie coudée s'engage latéralement dans la rainure 31 et se trouve bloquée verticalement contre le bord supérieur de la rainure 31, l'utilisateur pouvant alors relâcher la pression sur le récipient blender 100 sans que l'embase 102 ne soit soulevée sous l'effet du ressort de rappel 60.

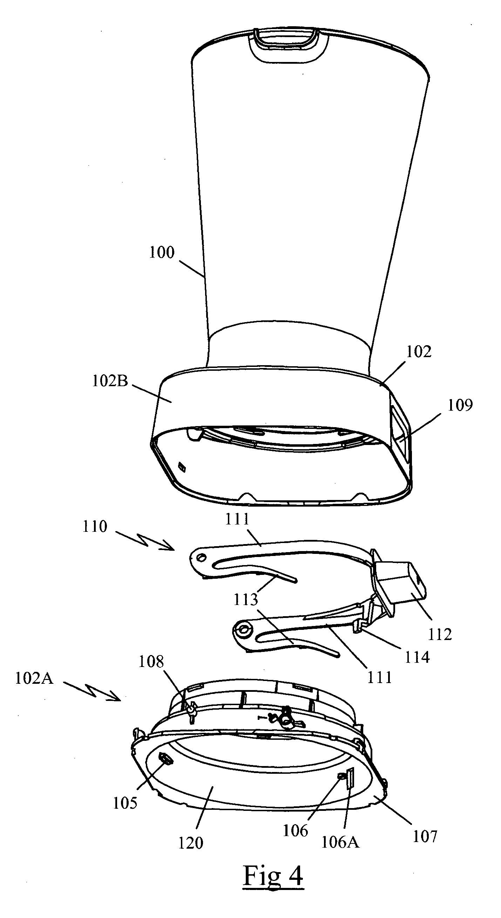

Afin d'obtenir un verrouillage équilibré de l'embase 102 sur le socle de réception 2, l'embase comporte également un ergot 105, illustré en pointillé sur la figure 3B, venant s'engager dans la rainure 31 de la troisième découpe 3, et un ergot 106, visible sur la figure 4, venant s'engager dans la rainure 31 de la deuxième découpe 3 de manière à fournir deux points de verrouillage supplémentaire bloquant verticalement l'embase 102 sur le socle de réception 2, de manière similaire au verrouillage obtenu par l'engagement de la patte 104 dans la rainure 31.

Dans cette position d'immobilisation du récipient blender 100 sur le socle de réception 2, le dispositif de freinage se trouve mis hors service par l'action de la patte 104 sur la tige de sécurité 6.

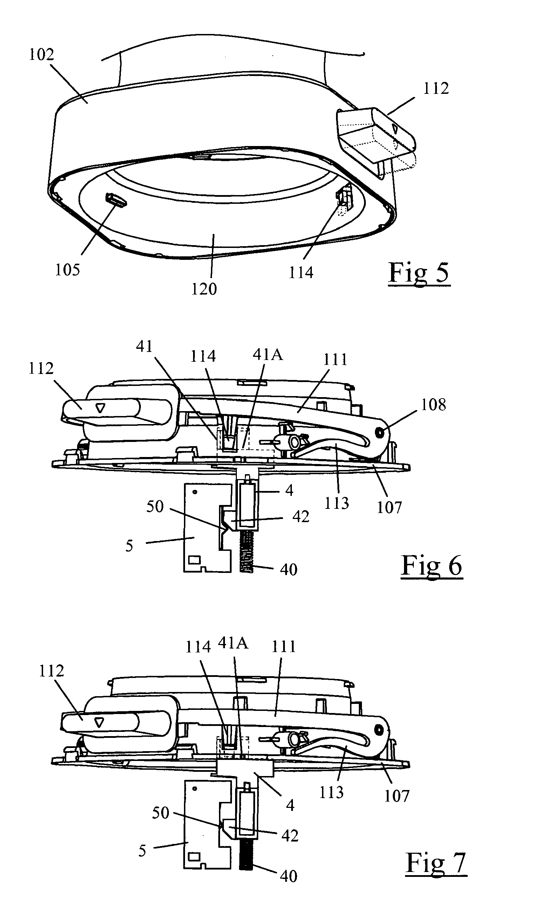

Les figures 4 et 5 illustrent le dispositif de commande du moteur 1 intégré dans l'embase 102 du récipient blender.

Conformément à ces figures, l'embase 102 du récipient blender comporte une pièce interne 102A comprenant une paroi définissant l'orifice central 120 de l'embase, la pièce interne 102A supportant un levier de commande 110 s'étendant dans l'espace séparant la pièce interne 102A d'une pièce externe 102B définissant l'apparence de l'embase 102.

De manière avantageuse, le levier de commande 110 présente un corps en forme de U comprenant deux branches 111 s'étendant de part et d'autre de l'orifice central 120 et dont les extrémités sont montées pivotantes sur des pions 108 portés par la pièce interne 102A. Le levier de commande 110 supporte un bouton de commande 112 disposé dans la partie reliant les branches 111, ce bouton de commande 112 faisant saillie au travers d'une lumière 109 de l'embase 102 présentant une largeur correspondant à la largeur du bouton de commande 112 et une hauteur correspondant sensiblement à deux fois la hauteur du bouton de commande 112 de manière à ce que le bouton de commande 112 puisse débattre verticalement au travers de la lumière 109 entre une position haute et une position basse, illustrée en pointillé sur la figure 5.

Afin d'assurer un retour automatique du bouton de commande 112 dans la position haute, les extrémités des branches 111 du levier de commande 110 se prolongent par une partie effilée 113 flexible, à déformation programmée, s'étendant sous la branche 111 du levier de commande 110 et prenant appui sur un flasque 107 de la partie interne 102A de manière à constituer des moyens de rappel élastiques du bouton de commande 112 dans la position haute.

Le levier de commande 110 comprend également un doigt d'actionnement 114 qui vient s'insérer dans une ouverture 106A de la paroi de la pièce interne 102A, ce doigt d'actionnement 114 venant s'engager dans la découpe 3 du socle de réception 2 comprenant la touche de manoeuvre 41 A de la tige de commande 4 lorsque l'embase 102 est placée sur le socle de réception 2, avec le bouton de commande 112 orienté vers la face avant du boîtier 10.

Conformément à la figure 6, le récipient blender 100 est verrouillé sur le socle de réception 2 par rotation de l'embase 102 de manière à ce que le doigt d'actionnement 114 coulisse latéralement dans la rainure 31 et s'engage dans l'empreinte 41 de la tige de commande 4. Dans la position haute du bouton de commande 112 illustrée à la figure 6, l'extrémité inférieure du doigt d'actionnement 114 n'exerce pas de pression verticale sur la touche de manoeuvre 41A de sorte que la tige de commande 4 reste dans la position d'arrêt vers laquelle elle est ramenée par le ressort 40.

Dans cette position d'arrêt, la tige de commande 4 comporte une came 42 qui se trouve au dessus d'un bossage 50 d'un contacteur de l'interrupteur 5 de sorte que ce dernier est ouvert et le moteur 1 n'est pas alimenté en courant.

Lorsque l'utilisateur presse sur le bouton de commande 112 pour l'amener dans la position basse illustrée sur la figure 7, le doigt d'actionnement 114 exerce une poussée vers le bas sur la touche de manoeuvre 41A, ce qui provoque le déplacement de la tige de commande 4 vers la position de fonctionnement dans laquelle la came 42 appuie sur le bossage 50 du contacteur, ce qui provoque la fermeture de l'interrupteur 5 et la mise en marche du moteur 1.

On obtient ainsi un appareil comprenant un boîtier moteur 10 pouvant être utilisé avec un bol hachoir 200, ainsi que cela est illustré sur la figure 8, avec une grande sécurité d'utilisation étant donné que, dans ce cas, les pattes 203 du couvercle 202 viennent actionner simultanément la tige de commande 4 du moteur 1 et la tige de sécurité 6 lorsqu'une pression verticale est exercée sur le couvercle 202 de manière à permettre simultanément la mise en marche du moteur 1 et la mise hors service des moyens de freinage. A l'inverse, lorsque l'utilisateur soulève le couvercle 202, les tiges de commande 4 et de sécurité 6 sont ramenées simultanément dans leur position d'arrêt et de repos par leur ressort de rappel 40, 60 de sorte que l'alimentation du moteur 1 est interrompue et le moteur 1 est freiné instantanément par le dispositif de freinage. L'action du dispositif de freinage garantit alors la sécurité de l'utilisateur en permettant un arrêt ultra rapide de l'outil de fragmentation 201 après la coupure d'alimentation du moteur 1 afin d'obtenir un temps d'arrêt de l'outil de fragmentation 201 inférieur au temps nécessaire à l'utilisateur pour retirer le couvercle 202 et accéder au contenu du bol hachoir 200. Il n'y a donc aucun risque que l'utilisateur puisse avoir accès au contenu du bol hachoir 200 alors que l'outil de fragmentation 201 est encore en train de tourner sur l'inertie du moteur 1.

De plus, le couvercle 202 ne peut être retiré du socle de réception 2 qu'après un mouvement de rotation du couvercle 202, pour extraire les pattes 203 des rainures 31, de sorte que le temps nécessaire pour accéder au contenu du récipient 200 est augmenté.

Lorsque l'utilisateur souhaite utiliser le boîtier moteur 10 avec le récipient blender 100, tel que cela est illustré sur la figure 1, la mise en place et le verrouillage de l'embase 102 du récipient blender 100 sur le boîtier moteur 10 s'accompagnent de la mise hors service du dispositif de freinage grâce à l'enfoncement de la tige de sécurité 6 par la patte 104 portée par l'embase 102. Si l'utilisateur souhaite faire fonctionner le moteur 1, il lui suffit d'appuyer sur le bouton de commande 112 présent sur l'embase 102 pour que le déplacement de ce dernier vers le bas provoque l'enfoncement de la tige de commande 4 par le doigt d'actionnement 114, un relâchement du bouton de commande 112 provoquant un arrêt de l'alimentation du moteur 1 par le retour de la tige de commande 4 en position d'arrêt sous l'effet du ressort de rappel 40. Dans ce cas, l'arrêt du moteur 1 s'effectue progressivement, en quelques secondes, sans action du dispositif de freinage de sorte que le flux de mixage n'est pas brutalement perturbé, ce qui permet de limiter les risques de débordement par le couvercle 103 dans le cas de mixage de liquide.

Cette utilisation du récipient blender avec le dispositif de freinage désactivé reste sécuritaire car la forme profonde du récipient blender 100 et le temps nécessaire pour retirer le couvercle 103 du récipient limitent le risque de contact avec l'outil de mixage 101 encore en mouvement.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation de l'invention non représentée, l'accessoire utilisé avec l'appareil blender comportant une embase munie d'une patte de neutralisation des moyens de freinage pourra être un cône presse-agrume ou bien encore un accessoire muni d'un tambour pour râper les aliments.

## Revendications

1. Appareil électroménager de préparation culinaire comportant un boîtier (10) moteur comportant un socle de réception (2) destiné à recevoir alternativement différents types d'accessoires amovibles, tel un récipient blender (100) ou un bol hachoir (200), le boîtier (10) renfermant un moteur (1) pour l'entraînement d'un outil de travail (101, 201) porté par l'accessoire (100, 200) dont le fonctionnement est commandé par un interrupteur (5) de marche et d'arrêt du moteur (1) pouvant être actionné lors d'un mouvement d'une partie de l'accessoire (100; 200) posé sur le boîtier (10), **caractérisé en ce que** le boîtier (10) comporte également un dispositif de freinage permettant de freiner brutalement le moteur (1) après la commande d'arrêt du moteur (1) par ledit interrupteur (5) et **en ce que** l'appareil comporte au moins un accessoire (100) comprenant une embase (102) comportant des moyens d'actionnement (104) rendant le dispositif de freinage inactif lorsque l'accessoire (100) est utilisé avec ledit boîtier (10).

2. Appareil électroménager de préparation culinaire selon la revendication 1, **caractérisé en ce que** le dispositif de freinage est activé par une tige de sécurité (6) mobile entre une position de repos dans laquelle le dispositif de freinage est actif et une position de fonctionnement dans laquelle le dispositif de freinage est inactif, ladite tige (6) étant ramenée dans la position de repos par des moyens de rappel (60), et **en ce que** l'embase (102) dudit accessoire (100) comprend une patte d'actionnement (104) venant agir sur la tige de sécurité (6) pour l'amener dans la position de fonctionnement lorsque l'embase (102) de l'accessoire (100) est disposée sur le socle de réception (2) du boîtier (10).

3. Appareil électroménager de préparation culinaire selon l'une quelconque des revendications 1 à 2, **caractérisé en ce que** ledit interrupteur (5) est actionné par une tige de commande (4) mobile entre une position de fonctionnement et une position d'arrêt du moteur, la tige de commande (4) étant ramenée vers la position d'arrêt par des moyens de rappel (40) et pouvant être déplacée vers la position de fonctionnement au moyen d'un organe (112, 202) actionnable manuellement sur l'accessoire (100, 200).

4. Appareil électroménager de préparation culinaire selon l'une quelconque des revendications 2 ou 3, **caractérisé en ce que** ladite tige de commande (4) et/ou ladite tige de sécurité (6) comportent une touche de manoeuvre (41A, 61A) s'étendant au niveau du socle de réception (2).

5. Appareil électroménager de préparation culinaire selon la revendication 4, **caractérisé en ce que** ladite touche de manoeuvre (41A, 61A) est disposée derrière une ouverture formée à la base d'une rampe de guidage (30) permettant une liaison de type liaison baïonnette avec l'accessoire (100, 200).

6. Appareil électroménager de préparation culinaire selon l'une quelconque des revendications 1 à 5, **caractérisé en ce qu'**il comporte un bol hachoir (200) pouvant reposer sur le socle de travail (2), ledit bol hachoir (200) étant fermé par un couvercle (202) présentant une forme adaptée pour venir actionner la tige de commande (4) du moteur et la tige de sécurité (6) seulement lorsqu'une pression verticale est exercée sur le dessus du couvercle (202).

7. Appareil électroménager de préparation culinaire selon l'une quelconque des revendications 1 à 6, **caractérisé en ce que** ledit accessoire (100) comportant les moyens d'actionnement rendant le dispositif de freinage inactif est un récipient blender (100) comprenant une embase (102) supportant un bouton de commande (112) permettant d'actionner l'interrupteur (5).

8. Appareil électroménager de préparation culinaire selon la revendication 7, **caractérisé en ce que** ledit bouton de commande (112) traverse une ouverture (109) de l'embase (102) et est solidaire d'une pièce (110) montée pivotant sur l'embase (102), ladite pièce (110) comportant une partie (113) élastiquement déformable assurant le rappel automatique du bouton de commande (112) dans une position d'arrêt du moteur (1).

9. Appareil électroménager de préparation culinaire selon l'une quelconque des revendications 1 à 8, **caractérisé en ce que** ledit dispositif de freinage comporte un dispositif de type inverseur établissant une liaison court-circuit entre les bornes de l'induit du moteur (1).

## Patentansprüche

1. Elektrohaushaltsgerät zur Zubereitung von Nahrungsmitteln mit einem Motorgehäuse (10), das einen Aufnahmesockel (2) umfasst, der für die abwechselnde Aufnahme unterschiedlicher Arten von abnehmbaren Aufsätzen bestimmt ist, wie einem Mixergefäß (100) oder einem Zerkleinerergefäß (200), wobei das Gehäuse (10) einen Motor (1) zum Antrieb eines Arbeitswerkzeugs (101, 201) umschließt, das von dem Aufsatz (100, 200) getragen wird, dessen Betrieb durch einen Schalter (5) zum Ein- und Ausschalten des Motors (1) gesteuert wird, wobei dieser Schalter bei einer Bewegung eines Teils des auf das Gehäuse (10) gesetzten Aufsatzes (100, 200) betätigt werden kann, **dadurch gekennzeichnet, dass** das Gehäuse (10) außerdem eine Bremsvorrichtung umfasst, die das abrupte Bremsen des Motors (1) nach dem Befehl zum Ausschalten des Motors (1) durch den genannten Schalter (5) ermöglicht, und dass das Gerät mindestens einen Aufsatz (100) mit einem Sockel (102) umfasst, der Betätigungsmittel (104) umfasst, die die Bremsvorrichtung deaktivieren, wenn der Aufsatz (100) mit dem genannten Gehäuse (10) verwendet wird.

2. Elektrohaushaltsgerät zur Zubereitung von Nahrungsmitteln nach Anspruch 1, **dadurch gekennzeichnet, dass** die Bremsvorrichtung durch einen Sicherheitsstift (6) aktiviert wird, der sich zwischen einer Ruhestellung, in der die Bremsvorrichtung aktiviert ist, und einer Betriebsstellung, in der die Bremsvorrichtung deaktiviert ist, bewegen lässt, wobei der genannte Stift (6) von Rückstellmitteln (60) in die Ruhestellung zurückgebracht wird, und dass der Sockel (102) des genannten Aufsatzes (100) eine Betätigungslasche (104) umfasst, die so auf den Sicherheitsstift (6) wirkt, dass dieser in die Betriebsstellung gebracht wird, wenn der Sockel (102) des Aufsatzes (100) auf den Aufnahmesockel (2) des Gehäuses (10) gesetzt wird.

3. Elektrohaushaltsgerät zur Zubereitung von Nahrungsmitteln nach einem der Ansprüche 1 bis 2, **dadurch gekennzeichnet, dass** der genannte Schalter (5) durch einen Steuerstift (4) betätigt wird, der sich zwischen einer Betriebsstellung und einer Ruhestellung des Motors bewegen lässt, wobei der Steuerstift (4) durch Rückstellmittel (40) in die Ruhestellung zurückgebracht wird und mittels eines manuell an dem Aufsatz (100, 200) zu betätigenden Betätigungselements (112, 202) in die Betriebsstellung bringen lässt.

4. Elektrohaushaltsgerät zur Zubereitung von Nahrungsmitteln nach einem der Ansprüche 2 oder 3, **dadurch gekennzeichnet, dass** der genannte Steuerstift (4) und/oder der genannte Sicherheitsstift (6) eine Betätigungstaste (41A, 61A) umfassen, die sich am Aufnahmesockel (2) befindet.

5. Elektrohaushaltsgerät zur Zubereitung von Nahrungsmitteln nach Anspruch 4, **dadurch gekennzeichnet, dass** die genannte Betätigungstaste (41A, 61A) hinter einer Öffnung angeordnet ist, die an der Basis einer Führungsrampe (30) ausgebildet ist, die die Herstellung einer Bajonettverbindung mit dem Aufsatz (100, 200) ermöglicht.

6. Elektrohaushaltsgerät zur Zubereitung von Nahrungsmitteln nach einem der Ansprüche 1 bis 5, **dadurch gekennzeichnet, dass** es ein Zerkleinerergefäß (200) umfasst, das auf dem Arbeitssockel (2) ruhen kann, wobei das genannte Zerkleinerergefäß (200) durch einen Deckel (202) verschlossen wird, der eine Form aufweist, die nur dann die Betätigung des Steuerstiftes (4) des Motors und des Sicherheitsstiftes (6) gestattet, wenn ein vertikaler Druck auf die Oberseite des Deckels (202) ausgeübt wird.

7. Elektrohaushaltsgerät zur Zubereitung von Nahrungsmitteln nach einem der Ansprüche 1 bis 6, **dadurch gekennzeichnet, dass** der genannte Aufsatz (100), der die Betätigungsmittel umfasst, die die Bremsvorrichtung deaktivieren, ein Mixergefäß (100) ist, das einen Sockel (102) umfasst, der mit einem Schaltknopf (112) ausgestattet ist, mit dem sich der Schalter (5) betätigen lässt.

8. Elektrohaushaltsgerät zur Zubereitung von Nahrungsmitteln nach Anspruch 7, **dadurch gekennzeichnet, dass** der genannte Schaltknopf (112) durch eine Öffnung (109) des Sockels (102) ragt und mit einem Element (110) verbunden ist, das schwenkbar auf dem Sockel (102) montiert ist, wobei das genannte Element (110) einen elastisch verformbaren Teil (113) aufweist, der die automatische Rückstellung des Schaltknopfes (112) in eine Ruhestellung des Motors (1) sicherstellt.

9. Elektrohaushaltsgerät zur Zubereitung von Nahrungsmitteln nach einem der Ansprüche 1 bis 8, **dadurch gekennzeichnet, dass** die genannte Bremsvorrichtung eine Umkehrvorrichtung umfasst, die eine Kurzschlussverbindung zwischen den Anschlüssen des Ankers des Motors (1) herstellt.

## Claims

1. Food preparation household electrical appliance comprising a motor housing (10) having a receiving base (2) for alternatively receiving various types of removable accessory, such as a blender container (100) or a chopper bowl (200), the housing (10) containing a motor (1) for driving a working tool (101, 201) carried by the accessory (100, 200) whose operation is controlled by a switch (5) for switching the motor (1) on and off which can be actuated when moving a part of the accessory (100, 200) placed on the housing (10), **characterised in that** the housing (10) also comprises a braking device for quickly braking the motor (1) after the motor (1) has been switched off by said switch (5) and **in that** the appliance comprises at least one accessory (100) comprising a base (102) having actuation means (104) making the braking device inactive when the accessory (100) is used with said housing (10).

2. Food preparation household electrical appliance according to claim 1, **characterised in that** the braking device is actuated by a safety rod (6) movable between a rest position in which the braking device is active and an operating position in which the braking device is inactive, said rod (6) being returned to the rest position by return means (60), and **in that** the base (102) of said accessory (100) comprises an actuation lug (104) acting on the safety rod (6) to bring it into operating position when the base (102) of the accessory (100) is placed on the receiving base (2) of the housing (10).

3. Food preparation household electrical appliance according to claim 1 or 2, **characterised in that** said switch (5) is actuated by a control rod (4) movable between a motor on position and a motor off position, the control rod (4) being returned to the off position by return means (40) and which can be moved to the on position by means of a member (112, 202) operated manually on the accessory (100, 200).

4. Food preparation household electrical appliance according to claim 2 or 3, **characterised in that** said control rod (4) and/or said safety rod (6) comprise an operating button (41 A, 61 A) extending at the receiving base (2).

5. Food preparation household electrical appliance according to claim 4, **characterised in that** said operating button (41A, 61A) is arranged behind an opening formed at the base of a guide ramp (30) allowing a bayonet type connection with the accessory (100, 200).

6. Food preparation household electrical appliance according to any of claims 1 to 5, **characterised in that** it comprises a chopper bowl (200) that can rest on the working base (2), said chopper bowl (200) being closed by a lid (202) having a shape adapted to operate the motor control rod (4) and the safety rod (6) only when vertical pressure is applied on the top of the lid (202).

7. Food preparation household electrical appliance according to any of claims 1 to 6, **characterised in that** said accessory (100) comprising the actuation means for making the braking device inactive is a blender container (100) comprising a base (102) supporting a control knob (112) for actuating the switch (5).

8. Food preparation household electrical appliance according to claim 7, **characterised in that** said control knob (112) passes through an opening (109) of the base (102) and is fastened to a part (110) pivotally mounted on the base (102), said part (110) having an elastically deformable part (113) automatically returning the control knob (112) into a position in which the motor (1) is off.

9. Food preparation household electrical appliance according to any of claims 1 to 8, **characterised in that** said braking device comprises an inverter type device short-circuiting the terminals of the armature of the motor (1).
